# EUROPEAN PATENT SPECIFICATION

(11) **EP 1 395 995 B1**
(45) Date of publication and mention of the grant of the patent: **22.03.2006**
(21) Application number: 02730598.6
(22) Date of filing: 21.05.2002
(51) Int. Cl.: G21C 19/20, G21C 1/07

(54) **METHOD AND DEVICE FOR SLOWING DOWN SPHERICAL ELEMENTS IN A PEBBLE BED NUCLEAR REACTOR**
VERFAHREN UND VORRICHTUNG ZUM ABBREMSEN VON KUGELFÖRMIGEN BETRIEBSELEMENTEN IN EINEM KUGELHAUFENREAKTOR
PROCEDE ET DISPOSITIF DE RALENTISSEMENT D'ELEMENTS SPHERIQUES DANS UN REACTEUR NUCLEAIRE A LIT DE BOULETS

(30) Priority: 23.05.2001 ZA 200104227
(43) Date of publication of application: 10.03.2004
(73) Proprietor: Pebble Bed Modular Reactor (Proprietary) Limited, 0046 Centurion (ZA)
(72) Inventor: CURTOLO, Frank, 7600 Stellenbosch (ZA); HAMMAN, Deon, 0181 Elarduspark (ZA)
(74) Representative: Hübner, Gerd
(86) International application number: PCT/IB2002/001797
(87) International publication number: WO 2002/095767

(56) References cited:
- GB-A- 1 208 877
- US-A- 4 356 145
- US-A- 4 789 519

## Description

This invention relates to nuclear power. More particularly, it relates to a method of decelerating spherical elements before being discharged from a discharge end of a sphere flow path, to a nuclear power plant, to a decelerating assembly and to a decelerator fitting.

In a nuclear reactor of the high-temperature gas-cooled type, use is made of fuel elements, and often moderator elements, which are spherical in shape. These are referred to as "pebbles" and a reactor of this type is generally known as a pebble bed reactor. In a pebble bed reactor it is known to operate a multi-pass fuelling scheme in which fuel spheres are passed through a core of the reactor more than once in order to optimize burn-up of fuel. The fuel spheres and, if applicable, the moderator spheres are conveyed to an inlet in a reactor or storage vessel in a sphere flow path, partly by gravity but predominantly using gas under pressure.

Such a configuration is disclosed in GB-A-1208877.

Although the invention will find application particularly with fuel spheres it will, as mentioned above, also find application with moderator spheres. In the context of this specification, the term "spheres" will be considered to be broad enough to include both fuel spheres and, where appropriate, moderator spheres.

The spheres are fed into the reactor vessel through sphere flow paths having discharge ends which open into the reactor vessel. The spheres are fed into the reactor vessel at or adjacent the top thereof, from where they fall onto an upper surface of a bed of spheres in the reactor core.

In order to reduce the risk of damage to the spheres as well as sphere bounce, which could result in incorrect placement of a sphere in the reactor core, it is desirable that the spheres enter the reactor vessel at a relatively low velocity.

According to one aspect of the invention, in a nuclear power plant having a nuclear reactor of the pebble bed type, making use of spherical fuel and moderator elements, and an element handling system having at least one sphere flow path along which spheres are conveyed under the influence of a fluid stream and the sphere flow path having a discharge end via which spheres are discharged from the sphere flow path, there is provided a method of decelerating spheres before being discharged from the discharge end of the sphere flow path, which method includes the steps of
conveying the spheres along the sphere flow path towards the discharge end thereof under the influence of a first fluid stream;
introducing a counter stream of fluid into the sphere flow path at a position adjacent the discharge end of the sphere flow path; and
extracting fluid from the sphere flow path at a position spaced from the discharge end of the sphere flow path and at a rate such that at least a portion of the counter stream flows inwardly away from the discharge end and serves to decelerate spheres prior to being discharged from the discharge end of the sphere flow path.

The sphere flow path may be defined, at least in part, by a length of pipe an end of which defines the discharge end, the method including feeding the counter stream into the length of pipe through a counter stream inlet extending through a wall of the pipe closely spaced from the end of the length of pipe defining the discharge end of the sphere flow path.

With high-temperature reactors it is desirable that the coolant remain within the reactor and not pass into the sphere flow path since exposure to high temperatures could lead to damage to components, such as seals, used in the sphere flow path. Accordingly, when the discharge end of the sphere flow path opens into a reactor vessel of the nuclear reactor, the method may include extracting fluid from the sphere flow path at a rate which results in part of the counter stream flowing into the reactor vessel through the discharge end of the sphere flow path thereby to inhibit ingress of high temperature coolant from the reactor vessel into the sphere flow path.

According to another aspect of the invention there is provided a nuclear power plant having a nuclear reactor of the pebble bed type and an element handling system for transporting spherical fuel and/or moderator elements, the element handling system including
at least one sphere flow path along which spheres can be conveyed under the influence of a first fluid stream, the sphere flow path having a discharge end from which the spheres are discharged;
a counter fluid inlet leading into the sphere flow path at a position adjacent the discharge end thereof, the counter fluid inlet being connected or connectable to a pressurised supply of fluid; and
a fluid extraction outlet leading from the sphere flow path at a position which is spaced further from the discharge end of the sphere flow path than the counter fluid inlet, the fluid extraction outlet being connected or connectable to fluid extraction means whereby fluid can be extracted from the sphere flow path through the fluid extraction outlet.

The counter fluid inlet may include a plurality of circumferentially spaced inlet openings which lead from a feed chamber surrounding the sphere flow path into the sphere flow path, the feed chamber having an inlet which is connected or connectable in communication with the pressurised supply of fluid.

The fluid extraction outlet may comprise a plurality of circumferentially spaced outlet openings which lead from the sphere flow path into an extraction chamber surrounding the sphere flow path, the extraction chamber having an outlet which is connected or connectable to the fluid extraction means.

The nuclear power plant may include control means for regulating the rate of fluid flow through at least one of the counter fluid inlet and the fluid extraction outlet. The control means may be configured to maintain the rate of fluid flow through the fluid extraction outlet at a rate which is greater than the rate of flow in the first fluid stream and less than the sum of the rates of flow in the first fluid stream and through the counter fluid inlet.

The discharge end of the sphere flow path may open into a reactor vessel of the nuclear reactor.

According to still another aspect of the invention, there is provided a decelerating assembly for decelerating spherical elements before being discharged from a discharge end of a sphere flow path along which the spherical elements are conveyed under the influence of a fluid stream, which assembly includes
a first fluid inlet leading into the.sphere flow path for introducing said fluid stream into the sphere flow path;
a counter fluid inlet leading into the sphere flow path at a position adjacent the discharge end thereof and downstream of the first fluid inlet, which counter fluid inlet is connectable in flow communication with a supply of fluid; and
a fluid extraction outlet leading from the sphere flow path at a position intermediate the first and counter fluid inlets.

The assembly may find application particularly as part of an element handling system of a nuclear power plant of the type described above.

Hence, the discharge end of the sphere flow path may open into a reactor vessel of a nuclear reactor.

According to yet another aspect of the invention, there is provided a decelerator fitting for use in decelerating spherical elements before being discharged from a discharge end of a sphere flow path along which the spherical elements are conveyed under the influence of a fluid stream, which fitting includes
a sphere flow path end member which defines an end portion of the sphere flow path, the sphere flow path end member defining a sphere inlet which is connectable to an upstream portion of the sphere flow path and a sphere outlet which, in use, forms the discharge end of the sphere flow path; and
a plurality of peripherally spaced counter fluid inlets positionned close to the sphere outlet and connectable in flow communication with a pressurized supply of fluid and which leads into the end portion of the sphere flow path between the sphere inlet and the sphere outlet.

The fitting may find application as part of an element handling system of a nuclear power plant of the type described above.

The counter fluid inlet may be positioned close to the sphere outlet or discharge end of the sphere flow path.

The sphere flow path end member may be tubular cylindrical and the counter fluid inlet may include a plurality of circumferentially spaced inlet openings in the sphere flow path end member.

The counter fluid inlet may lead from a feed chamber which surrounds the sphere flow path end member, the feed chamber having an inlet which is connectable to a pressurized supply of fluid.

The invention will now be described, by way of example, with reference to the accompanying diagrammatic drawings.

In the drawings,
Figure 1 shows part of a nuclear power plant in accordance with the invention;
Figure 2 shows a perspective view of a decelerating assembly in accordance with the invention;
Figure 3 shows a sectional perspective view of part of the assembly of Figure 2 and a decelerator fitting in accordance with the invention; and
Figure 4 shows a sectional perspective view of another part of the assembly of Figure 2.

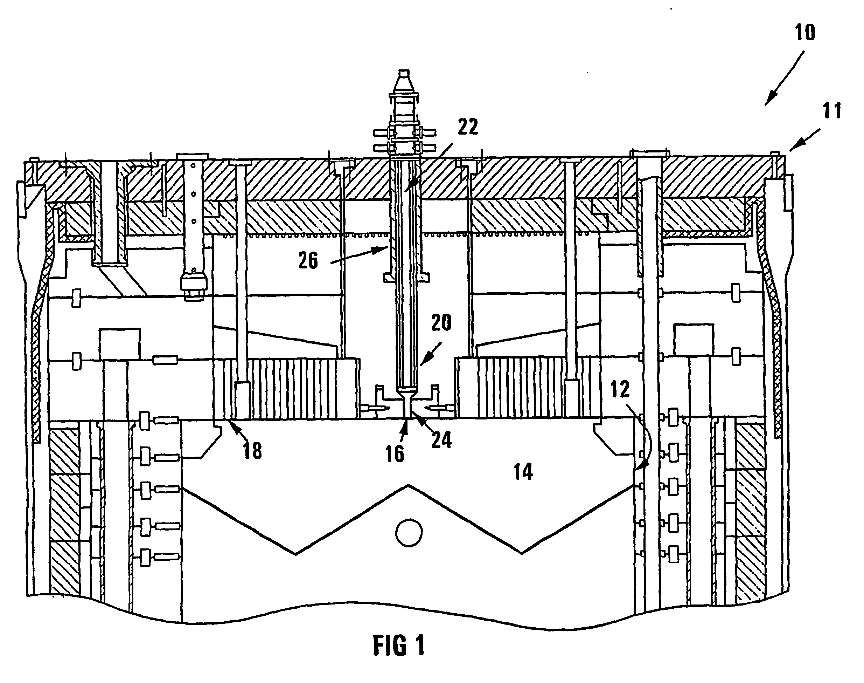

In Figure 1 of the drawings, reference numeral 10 refers generally to part of a nuclear power plant in accordance with the invention. The plant 10 includes a nuclear reactor 11 of the pebble bed type having a generally cylindrical reactor vessel, generally indicated by reference numeral 12. A core cavity 14 is defined within the reactor vessel 12. The reactor 11 includes a plurality of inlet openings 16, one of which is shown in Figure 1, defined in a top 18 of the reactor vessel 12, through which inlet openings 16 fuel and/or moderator elements, which are spherical in shape, are loadable into the core cavity 14. The inlet openings 16 extend through a graphite reflector provided on an interior of the reactor vessel 11 at the top end 18 thereof. The inlet openings 16 are positioned so that spheres are discharged into the vessel 12 at the desired positions.

Nuclear reactors 11 of this type often operate a multi-pass fuelling scheme in which fuel spheres are passed through the core 14 of the reactor 11 more than once in order to optimize burn-up of fuel. To this end, a sphere outlet (not shown) is provided in a bottom (not shown) of the reactor vessel 12 via which fuel elements and/or moderator elements can be extracted from the reactor vessel 12.

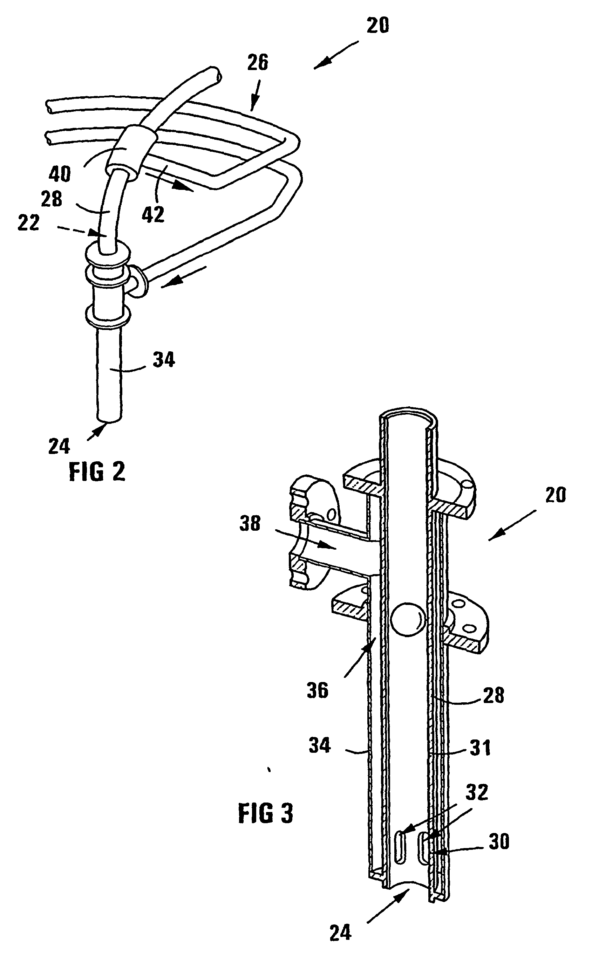

Referring now also to Figures 2 and 3 of the drawings, the plant 10 includes an element handling system, part of which is generally indicated by reference numeral 20, which is external to the reactor vessel and whereby fuel elements and/or moderator elements are conveyed to desired locations within the plant 10.

The part of the element handling system 20 shown in Figure 2 of the drawings, is intended to feed fuel and/or moderator elements into the reactor vessel 12 through the inlet openings 16.

The element handling system 20 includes a sphere flow path 22 having a discharge end 24 through which a sphere can be discharged through the inlet opening 16 into the core cavity 14. Spheres are conveyed along the sphere flow path 22 under the influence of a first fluid stream in the form of a pressurised gas.

As can be seen in the drawings, the discharge end 24 opens downwardly. Accordingly, the combined influences of the first. fluid stream and of gravity on the spheres travelling along the sphere flow path 22 will tend to cause the spheres to enter the reactor vessel 12 at a relatively high velocity. This potentially could lead to damage of the spheres and/or to sphere bounce within the core cavity 14 which could result in an undesirable positioning of the spheres within the core 14 of the reactor 12.

Accordingly, in order to reduce the velocity at which spheres enter the core cavity 14, the plant 10 includes a decelerating assembly, generally indicated by reference numeral 26, for decelerating spheres prior to their being discharged from the discharge end 24 of the sphere flow path 22 into the core cavity 14.

An end portion of the sphere flow path 22 from which the discharge end 24 opens is defined by a sphere flow path end member in the form of a length of tubular cylindrical conduit or pipe 28. An upstream end of the length of conduit 28 is connected to the remainder of the sphere flow path in a gas-tight fashion.

As can best be seen from Figure 3 of the drawings, in the length of conduit 29, adjacent to the discharge end 24 of the sphere flow path 22, is provided a counter stream inlet 30 extending through a wall 31 of the conduit 29. The counter stream inlet 30 includes a plurality of circumferentially spaced inlet openings 32 extending through the wall 31 of the conduit 28. A sleeve 34 extends with clearance around an end portion of the conduit 28 in which the counter stream inlet 30 is provided and is connected at its ends to the conduit 28 so as to define an annular feed chamber 36 which is connected in flow communication with the sphere flow path 22 by means of the openings 32. An inlet 38 leads into the feed chamber 36 and is connectable to a pressurised supply of gas. The inlet 38 is typically connected to an outlet manifold of the pressurised gas supply system which supplies gas to the element handling system.

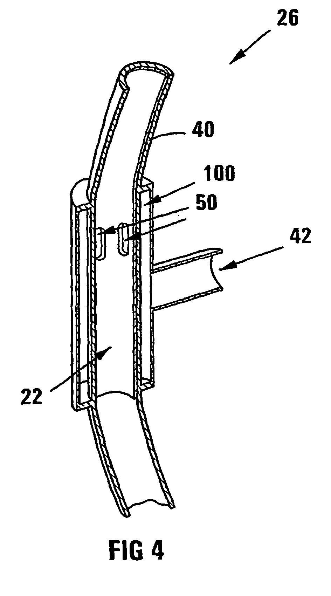

Similarly, the decelerating assembly 26 includes a sleeve 40 (Figure 4) which extends around the conduit 28 at a position spaced upstream of the sleeve 34 and defines an exhaust or extraction chamber 100 which is similar to the feed chamber and is connected in flow communication with the sphere flow path 22 by means of a plurality of spaced apart outlet openings 50. An outlet 42 leads from the sleeve 40 and is connectable to fluid extraction means. The outlet 42 is typically connected to an inlet manifold on a suction side of a blower (not shown) that provides a required pressure differential across the inlet and outlet manifolds of the pressurised gas supply system, supplying gas to the element handling system.

In use, as mentioned above, spheres are conveyed along the sphere flow path 22 under the influence of a pressurised fluid. A counter stream of fluid is introduced into the sphere flow path 22 through the counter stream inlet 30. In addition, fluid is extracted from the sphere flow path 22, through the outlet 42. The rate at which fluid is extracted from the outlet 42 is controlled such that the rate of flow through the outlet 42 is greater than the rate of fluid flow in the stream conveying the spheres along the sphere flow path 22 so that, at least a portion of the fluid being fed into the sphere flow path 22 through the counter stream inlet 30 flows in a direction away from the discharge end 24 of the sphere flow path 22, thereby serving to decelerate a sphere prior to its being discharged from the discharge end 24 of the sphere flow path 22.

The rate of fluid flow in the stream conveying the spheres along the sphere flow path 22 is typically controlled by means of a needle and seat valve, a constant pressure valve or a constant flow valve disposed in the flow path 22. Use of either a constant flow valve or constant pressure valve mitigates the effects of dynamic fluid interactions where there is interconnection of a plurality of sphere flow paths via a common manifold, thereby to improve the stability of system operation.

The deceleration effect of the counter stream of fluid is proportional to the rate of feed of fluid through the counter stream inlet 30. One or more flow control needle and seat valves are used to control the rate of fluid flow through the counter stream inlet 30. It will be appreciated that pressure and temperature as well as sphere diameter will influence the required rate of feed of fluid. The rate at which fluid is extracted from the outlet 42 is also adjusted to ensure that the required leakflow into the core is obtained. Control of the rate of fluid extraction is typically effected by a needle and seat valve.

In a high temperature gas-cooled reactor, it is desirable that high-temperature coolant from within the reactor vessel 12 does not enter the sphere flow path 22 through the discharge end 24 thereof, since exposure to high temperatures could lead to damage of components of the sphere flow path 22, e.g. seals and the like. Accordingly, the rate at which fluid is extracted from the sphere flow path 22 through the outlet 42 and fed into the sphere flow path 22 through the inlet 30 will be regulated so that a portion of the fluid being fed into the counter stream inlet 30 flows downwardly and out of the discharge end 24 of the sphere flow path 22 into the reactor vessel 11, i.e. the fluid extraction rate is controlled to be less than the sum of the rates of flow in the stream conveying the spheres and through the counter stream inlet 30. This will effectively form a seal to inhibit the ingress of high temperature coolant into the sphere flow path 22.

The Inventors believe that the invention will provide an effective means of decelerating spheres before entry into a reactor vessel 12 of the pebble bed type in a high temperature and high radiation environment and at varying densities of gasses. The invention will furthermore permit the regulating of gas leakage into the reactor vessel 12 and of the ingress of hot gasses from the reactor vessel 12 into the element handling system 20.

## Claims

1. A method of decelerating spheres before being discharged from the discharge end of the sphere flow path in a nuclear power plant (10) having a nuclear reactor (11) of the pebble bed type, making use of spherical fuel and/or moderator elements, and an element handling system (20) having at least one sphere flow path (22) along which spheres are conveyed under the influence of a fluid stream and the sphere flow path having a discharge end (24) via which spheres are discharged from the sphere flow path, **characterised in that** the method includes the steps of
conveying the spheres along the sphere flow path towards the discharge end thereof under the influence of a first fluid stream;
introducing a counter stream of fluid into the sphere flow path at a position closely spaced from the discharge end of the sphere flow path; and
extracting fluid from the sphere flow path at a position spaced further from the discharge end than the position at which the counter stream is introduced at a rate such that at least a portion of the counter stream flows inwardly away from the discharge end and serves to decelerate spheres prior to being discharged from the discharge end of the sphere flow path.

2. A method as claimed in Claim 1, **characterised in that** the sphere flow path is defined, at least in part, by a length of pipe, an end of which defines the discharge end, and **in that** the method includes feeding the counter stream into the length of pipe through a counter stream inlet extending through a wall of the pipe closely spaced from the end of the length of pipe defining the discharge end of the sphere flow path.

3. A method as claimed in Claim 1 or Claim 2, **characterised in that** it includes, when the discharge end of the sphere flow path opens into a reactor vessel of the nuclear reactor, extracting fluid from the sphere flow path at a rate which results in part of the counter stream flowing into the reactor vessel through the discharge end of the sphere flow path thereby to inhibit ingress of high-temperature coolant from the reactor vessel into the sphere flow path.

4. A nuclear power plant having a nuclear reactor of the pebble bed type and an element handling system (20) for transporting spherical fuel and/or moderator elements, **characterised in that** the element handling system includes
at least one sphere flow path (22) along which spheres can be conveyed under the influence of a first fluid stream, the sphere flow path having a discharge end (24) from which the spheres are discharged;
a counter fluid inlet (30) leading into the sphere flow path at a position closely spaced from the discharge end thereof, the counter fluid inlet being connected or connectable to a pressurised supply of fluid; and
a fluid extraction outlet (42) leading from the sphere flow path at a position which is spaced further from the discharge end of the sphere flow path than the counter fluid inlet, the fluid extraction outlet being connected or connectable to fluid extraction means whereby fluid can be extracted from the sphere flow path through the fluid extraction outlet.

5. A nuclear power plant as claimed in Claim 4, **characterised in that** the counter fluid inlet includes a plurality of circumferentially spaced inlet openings which lead from a feed chamber surrounding the sphere flow path into the sphere flow path, and **in that** the feed chamber has an inlet which is connected or connectable in communication with the pressurised supply of fluid.

6. A nuclear power plant as claimed in Claim 4 or Claim 5, **characterised in that** the fluid extraction outlet comprises a plurality of circumferentially spaced outlet openings which lead from the sphere flow path into an extraction chamber surrounding the sphere flow path, and **in that** the extraction chamber has an outlet which is connected or connectable to the fluid extraction means.

7. A nuclear power plant as claimed in any one of Claims 4 to 6, inclusive, **characterised in that** it includes control means for regulating the rate of fluid flow through at least one of the counter fluid inlet and the fluid extraction outlet.

8. A nuclear power plant as claimed in Claim 7, **characterised in that** the control means is configured to maintain the rate of fluid flow through the fluid extraction outlet at a rate which is greater than the rate of flow in the first fluid stream and less than the sum of the rates of flow in the first fluid stream and through the counter fluid inlet.

9. A nuclear power plant as claimed in any one of Claims 4 to 8, **characterised in that** the discharge end of the sphere flow path opens into a reactor vessel of the nuclear reactor.

10. A decelerating assembly for decelerating spherical elements before being discharged from a discharge end of a sphere flow path along which the spherical elements are conveyed under the influence of a fluid stream, **characterised in that** the assembly includes
a first fluid inlet leading into the sphere flow path for introducing said fluid stream into the sphere flow path;
a counter fluid inlet leading into the sphere flow path at a position closely spaced from the discharge end thereof and downstream of the first fluid inlet, which counter fluid inlet is connectable in flow communication with a pressurized supply of fluid; and
a fluid extraction outlet leading from the sphere flow path at a position intermediate the first and counter fluid inlets.

11. A decelerating assembly as claimed in Claim 10, **characterised in that** the discharge end of the sphere flow path opens into a reactor vessel of a nuclear reactor.

12. A decelerator fitting for use in decelerating spherical elements before being discharged from a discharge end of a sphere flow path along which the spherical elements are conveyed under the influence of a fluid stream, **characterised in that** the fitting includes
a sphere flow path end member which defines an end portion of the sphere flow path, the sphere flow path end member defining a sphere inlet which is connectable to an upstream portion of the sphere flow path and a sphere outlet spaced from the sphere inlet which, in use, forms the discharge end of the sphere flow path; and
a plurality of peripherally spaced counter fluid inlets positioned close to the sphere outlet and connectable in flow communication with a pressurized supply of fluid and which leads into the end portion of the sphere flow path between the sphere inlet and the sphere outlet.

13. A decelerator fitting as claimed in Claim 12, **characterised in that** the sphere flow path end member is tubular cylindrical and the inlet openings are circumferentially spaced .

14. A decelerator fitting as claimed in Claim 12 or Claim 13, **characterised in that** the counter fluid inlets lead from a feed chamber which surrounds the sphere flow path end member, and **in that** the feed chamber has an inlet which is connectable to a pressurized supply of fluid.

## Patentansprüche

1. Verfahren zum Abbremsen sphärischer Körper, bevor diese aus dem Austritts-Ende einer Strom-Bahn für sphärische Körper austreten, in einem Atomkraftwerk (10) mit einem Kern-Reaktor (11) des Pebble-Typs, der sphärische Brennstoff- und/oder Bremssubstanz-Elemente einsetzt, und mit einem Element-Handhabungs-System (20) mit mindestens einer Strom-Bahn für sphärische Körper (22), entlang welcher sphärische Körper unter dem Einfluss eines Fluid-Stroms transportiert werden, und wobei die Strom-Bahn für sphärische Körper ein Austritts-Ende (24) aufweist, über welches die sphärischen Körper aus der Strom-Bahn für sphärische Körper austreten, **dadurch gekennzeichnet, dass** das Verfahren die Schritte umfasst
Führen der sphärischen Körper entlang der Strom-Bahn für sphärische Körper in Richtung auf deren Austritts-Ende unter dem Einfluss eines ersten Fluid-Stroms;
Einführen eines Fluid-Gegenstroms in die Strom-Bahn für sphärische Körper bei einer Position dicht beabstandet zu dem Austritts-Ende der Strom-Bahn für sphärische Körper; und
Entziehen von Fluid aus der Strom-Bahn für sphärische Körper bei einer Position, die weiter beabstandet zu dem Austritts-Ende als die Position ist, bei der der Gegenstrom mit einer Geschwindigkeit eingeführt wird, so dass mindestens ein Teil des Gegenstroms nach innen weg von dem Austritts-Ende strömt und dazu dient die sphärischen Körper abzubremsen, bevor diese aus dem Austritts-Ende der Strom-Bahn für sphärische Körper austreten.

2. Verfahren nach Anspruch 1, **dadurch gekennzeichnet, dass** die Strom-Bahn für sphärische Körper zumindest teilweise durch eine Länge einer Leitung gebildet ist, deren eines Ende das Austritts-Ende bildet, und dass das Verfahren das Führen des Gegenstroms in der Leitungslänge durch einen Gegenstrom-Einlass umfasst, der durch eine Wand der Leitung dicht beabstandet von dem Ende der Länge der Leitung läuft, das das Austritts-Ende der Strom-Bahn für sphärische Körper bildet.

3. Verfahren nach Anspruch 1 oder 2, **dadurch gekennzeichnet, dass** dieses umfasst, wenn das Austritts-Ende der Strom-Bahn für sphärische Körper in einen Reaktor-Behälter des Kern-Reaktors mündet, Entziehen von Fluid aus der Strom-Bahn für sphärische Körper mit einer Geschwindigkeit, dazu führt, dass ein Teil des Gegenstroms in den Reaktor-Behälter durch das Austritts-Ende der Strom-Bahn für sphärische Körper strömt, wodurch der Zutritt von Hochtemperatur-Kühlmittel aus dem Reaktor-Behälter in die Strom-Bahn für sphärische Körper verhindert wird.

4. Atomkraftwerk mit einem Kem-Reaktor des Pebble-Typs und einem Element-Handhabungs-System (20) zum Transport sphärischer Brennstoff- und/oder Bremssubstanz-Elemente, **dadurch gekennzeichnet, dass** das Element-Handhabungs-System umfasst
mindestens eine Strom-Bahn für sphärische Körper (22), entlang welcher sphärische Körper unter dem Einfluss eines ersten Fluid-Stroms transportiert werden können, wobei die Strom-Bahn für sphärische Körper ein Austritts-Ende (24) aufweist, aus welchem die sphärischen Körper austreten;
einen Gegen-Fluid-Einlass (30), der in die Strom-Bahn für sphärische Körper bei einer Position führt, die dicht beabstandet zu deren Austritts-Ende ist, wobei der Gegen-Fluid-Einlass mit einer unter Druck stehenden Fluid-Versogung verbunden oder verbindbar ist; und
einen Fluid-Entziehungs-Auslass (42), der aus der Strom-Bahn für sphärische Körper bei einer Position führt, die weiter beabstandet von dem Austritts-Ende der Strom-Bahn für sphärische Körper als der Gegen-Fluid-Einlass ist, wobei der Fluid-Entziehungs-Auslass mit einem Fluid-Entziehungs-Mittel verbunden oder verbindbar ist, wodurch Fluid aus der Strom-Bahn für sphärische Körper durch den Fluid-Entziehungs-Auslass gezogen werden kann.

5. Atomkraftwerk nach Anspruch 4, **dadurch gekennzeichnet, dass** der Gegen-Fluid-Einlass eine Vielzahl peripher beabstandeter Einlass-Öffnungen aufweist, die aus einer Speise-Kammer, die die Strom-Bahn für sphärische Körper umgibt, in die Strom-Bahn für sphärische Körper führen, und dass die Speise-Kammer einen Einlass aufweist, der in Verbindung mit der unter Druck stehenden Fluid-Versorgung verbunden oder verbindbar ist.

6. Atomkraftwerk nach Anspruch 4 oder 5, **dadurch gekennzeichnet, dass** der Fluid-Entziehungs-Auslass eine Vielzahl peripher beabstandeter Auslass-Öffnungen aufweist, die aus der Strom-Bahn für sphärische Körper in eine Entziehungs-Kammer führen, die die Strom-Bahn für sphärische Körper umgibt, und dass die Entziehungs-Kammer einen Auslass aufweist, der mit dem Fluid-Entziehungs-Mittel verbunden oder verbindbar ist.

7. Atomkraftwerk nach einem der Ansprüche 4 bis inklusiv 6, **dadurch gekennzeichnet, dass** dieses ein Steuerungsmittel zum Regeln der Geschwindigkeit eines Fluid-Stroms durch den Gegen-Fluid-Einlass und/oder den Fluid-Entziehungs-Auslass umfasst.

8. Atomkraftwerk nach Anspruch 7, **dadurch gekennzeichnet, dass** das Steuerungsmittel ausgebildet ist, um die Geschwindigkeit des Fluid-Stroms durch den Fluid-Entziehungs-Auslass bei einer Geschwindigkeit zu halten, die größer als die Geschwindigkeit des Flusses in dem ersten Fluid-Strom und kleiner als die Summe der Geschwindigkeiten eines Flusses in dem ersten Fluid-Strom und durch den Gegen-Fluid-Einlass ist.

9. Atomkraftwerk nach einem der Ansprüche 4 bis 8, **dadurch gekennzeichnet, dass** das Austritts-Ende der Strom-Bahn für sphärische Körper in einen Reaktor-Behälter des Kern-Reaktors mündet.

10. Abbrems-Anordnung zum Abbremsen sphärischer Elemente bevor diese aus einem Austritts-Ende einer Strom-Bahn für sphärische Körper austreten, entlang welcher die sphärischen Elemente unter dem Einfluss eines Fluid-Stroms transportiert werden, **dadurch gekennzeichnet, dass** die Anordnung umfasst
einen ersten Fluid-Emlass, der in die Strom-Bahn für sphärische Körper zum Einführen des Fluid-Stroms in die Strom-Bahn für sphärische Körper führt;
einen Gegen-Fluid-Einlass, der in die Strom-Bahn für sphärische Körper bei einer Position führt, die dicht beabstandet zu deren Austritts-Ende und stromabwärts des ersten Fluid-Einlasses angeordnet ist, wobei der Gegen-Fluid-Einlass in Strömungs-Verbindung mit einer unter Druck stehenden Fluid-Versorgung verbindbar ist; und
einen Fluid-Entziehungs-Auslass, der aus der Strom-Bahn für sphärische Körper bei einer Position zwischen dem ersten und dem Gegen-Fluid-Einlass führt.

11. Abbrems-Anordnung nach Anspruch 10, **dadurch gekennzeichnet, dass** das Austritts-Ende der Strom-Bahn für sphärische Körper in einen Reaktor-Behälter eines Kern-Reaktors mündet.

12. Abbrems-Stück, das verwendet wird, um sphärische Elemente abzubremsen bevor diese aus einem Austritts-Ende einer Strom-Bahn für sphärische Körper austreten, entlang welcher die sphärischen Elemente unter dem Einfluss eines Fluid-Stroms transportiert werden, **dadurch gekennzeichnet, dass** das Stück umfasst
ein End-Element einer Strom-Bahn für sphärische Körper, das einen End-Abschnitt der Strom-Bahn für sphärische Körper bildet, wobei das End-Element der Strom-Bahn für sphärische Körper bildet einen Einlass für sphärische Körper, der mit einem stromaufwärtigen Abschnitt der Strom-Bahn für sphärische Körper verbindbar ist, und einen Auslass für sphärische Körper, der beabstandet zu dem Einlass für sphärische Körper ist, der im Einsatz das Austritts-Ende der Strom-Bahn für sphärische Körper bildet; und
eine Vielzahl peripher beabstandeter Gegen-Fluid-Einlässe, die nahe zu dem Auslass für sphärische Körper angeordnet sind und in Strömungs-Verbindung mit einer unter Druck stehenden Fluid-Versorgung verbindbar sind und die in den End-Abschnitt der Strom-Bahn für sphärische Körper zwischen dem Einlass für sphärische Körper und dem Auslass für sphärische Körper führen.

13. Abbrems-Stück nach Anspruch 12, **dadurch gekennzeichnet, dass**
das End-Element der Strom-Bahn für sphärische Körper rohrförmig zylindrisch ist und die Einlass-Öffnungen peripher beabstandet sind.

14. Abbrems-Stück nach Anspruch 12 oder 13, **dadurch gekennzeichnet, dass** die Gegen-Fluid-Einlässe aus einer Speise-Kammer führen, die das End-Element der Strom-Bahn für sphärische Körper umgibt, und dass die Speise-Kammer einen Einlass aufweist, der mit einer unter Druck stehenden Fluid-Versorgung verbindbar ist.

## Revendications

1. Procédé pour ralentir la vitesse des sphères avant qu'elles ne soient déchargées à partir de l'extrémité de déchargement de la voie d'écoulement des sphères dans une centrale nucléaire (10) comportant un réacteur nucléaire (11) du type à lit de boulets, utilisant des éléments sphériques de combustible et/ou de modérateur, et d'un système (20) de manutention d'éléments ayant au moins une voie d'écoulement des sphères (22) le long de laquelle des sphères sont transportées sous l'influence d'un courant de fluide et la voie d'écoulement des sphères ayant une extrémité (24) de déchargement à travers laquelle les sphères sont déchargées de la voie d'écoulement des sphères, **caractérisé en ce que** le procédé comprend les étapes consistant à :
- acheminer les sphères le long de la voie d'écoulement des sphères vers l'extrémité de déchargement de celle-ci sous l'influence d'un premier courant de fluide ;
- introduire un contre-courant de fluide dans la voie d'écoulement des sphères à une position étroitement espacée de l'extrémité de déchargement de la voie d'écoulement des sphères ; et
- extraire du fluide de la voie d'écoulement des sphères à une position encore plus éloignée de l'extrémité de déchargement que la position à laquelle le contre-courant est introduit à un débit tel qu'au moins une partie du contre-courant s'écoule vers l'intérieur en s'éloignant de l'extrémité de déchargement et sert à ralentir la vitesse des sphères avant qu'elles ne soient déchargées de l'extrémité de déchargement de la voie d'écoulement des sphères.

2. Procédé selon la revendication 1, **caractérisé en ce que** la voie d'écoulement des sphères est définie, au moins en partie, par une longueur de tube, dont une extrémité définit l'extrémité de déchargement, et **en ce que** le procédé comprend l'alimentation du contre-courant dans la longueur de tube à travers une entrée de contre-courant s'étendant à travers une paroi du tube étroitement espacée de l'extrémité de la longueur de tube définissant l'extrémité de déchargement de la voie d'écoulement des sphères.

3. Procédé selon la revendication 1 ou la revendication 2, **caractérisé en ce qu'**il comprend, lorsque l'extrémité de déchargement de la voie d'écoulement des sphères s'ouvre dans une cuve de réacteur du réacteur nucléaire, l'extraction du fluide de la voie d'écoulement des sphères à un débit qui résulte en partie du contre-courant s'écoulant dans la cuve de réacteur à travers l'extrémité de déchargement de la voie d'écoulement des sphères de sorte à empêcher l'entrée de liquide caloporteur à haute température de la cuve du réacteur dans la voie d'écoulement des sphères.

4. Centrale nucléaire comprenant un réacteur nucléaire du type à lit de boulets et un système (20) de manutention d'éléments pour transporter des éléments sphériques de combustible et/ou de modérateur, **caractérisé en ce que** le système de manutention d'éléments comprend :
- au moins une voie (22) d'écoulement des sphères le long de laquelle les sphères peuvent être transportées sous l'influence d'un premier courant de fluide, la voie d'écoulement des sphères comportant une extrémité (24) de déchargement à partir de laquelle les sphères sont déchargées ;
- une entrée (30) de contre-fluide conduisant dans la voie d'écoulement des sphères à une position étroitement espacée de l'extrémité de déchargement de celle-ci, l'entrée de contre-fluide étant reliée ou susceptible d'être reliée à une alimentation pressurisée de fluide ; et
- une sortie (42) d'extraction de fluide conduisant de la voie d'écoulement des sphères à une position qui est plus éloignée de l'extrémité de déchargement de la voie d'écoulement des sphères que l'entrée de contre-fluide, la sortie d'extraction du fluide étant reliée ou susceptible d'être reliée à des moyens d'extraction du fluide de sorte que le fluide puisse être extrait de la voie d'écoulement des sphères via la sortie d'extraction du fluide.

5. Centrale nucléaire selon la revendication 4, **caractérisée en ce que** l'entrée de contre-fluide comprend une pluralité d'ouvertures d'entrées espacées sur la circonférence qui conduit d'une chambre d'alimentation entourant la voie d'écoulement des sphères dans la voie d'écoulement des sphères, et **en ce que** la chambre d'alimentation comporte une entrée qui est reliée ou susceptible d'être reliée et en communication avec l'alimentation pressurisée de fluide.

6. Centrale nucléaire selon la revendication 4 ou la revendication 5, **caractérisée en ce que** la sortie d'extraction de fluide comprend une pluralité d'ouvertures de sortie espacées sur la circonférence qui conduisent de la voie d'écoulement des sphères dans une chambre d'extraction entourant la voie d'écoulement des sphères, et **en ce que** la chambre d'extraction comporte une sortie qui est reliée ou susceptible d'être reliée au moyen d'extraction du fluide..

7. Centrale nucléaire selon l'une quelconque des revendications 4 à 6, l'une et l'autre incluses, **caractérisée en ce qu'**elle comprend un moyen de commande pour réguler le débit d'écoulement du fluide à travers au moins une parmi l'entrée de contre-fluide et la sortie d'extraction de fluide.

8. Centrale nucléaire selon la revendication 7, **caractérisée en ce que** les moyens de contrôle sont configurés pour maintenir le débit d'écoulement du fluide, à travers la sortie d'extraction du fluide à un débit qui est supérieur au débit d'écoulement dans le premier courant de fluide et inférieur à la somme des débits d'écoulement dans le premier courant de fluide et à travers l'entrée de contre-fluide.

9. Centrale nucléaire selon l'une quelconque des revendications 4 à 8, **caractérisée en ce que** l'extrémité de déchargement de la voie d'écoulement des sphères s'ouvre dans une cuve de réacteur du réacteur nucléaire.

10. Ensemble de décélération pour décélérer des éléments sphériques avant qu'ils ne soient déchargés d'une extrémité de déchargement d'une voie d'écoulement des sphères le long de laquelle les éléments sphériques sont acheminés sous l'influence d'un courant de fluide, **caractérisé en ce que** l'ensemble comprend :
- une première entrée de fluide conduisant à la voie d'écoulement des sphères pour introduire ledit courant de fluide dans la voie d'écoulement des sphères;
- une entrée de contre-fluide conduisant dans la voie d'écoulement des sphères à une position étroitement espacée de l'extrémité de déchargement de celle-ci et en aval de la première entrée de fluide, laquelle entrée de contre-fluide est susceptible d'être reliée en communication d'écoulement à une alimentation pressurisée de fluide ; et
- une sortie d'extraction de fluide conduisant de la voie d'écoulement des sphères à une position intermédiaire entre la première entrée de fluide et l'entrée de contre-fluide.

11. Ensemble de décélération selon la revendication 10, **caractérisé en ce que** l'extrémité de déchargement de la voie d'écoulement des sphères s'ouvre dans une cuve de réacteur d'un réacteur nucléaire.

12. Raccord de décélération destiné à être utilisé dans des éléments sphériques de décélération avant qu'ils ne soient déchargés d'une extrémité de déchargement d'une voie d'écoulement des sphères le long de laquelle les éléments sphériques sont acheminés sous l'influence d'un courant de fluide, **caractérisé en ce que** le raccord comprend :
- un élément d'extrémité de voie d'écoulement des sphères qui définit une portion d'extrémité de la voie d'écoulement des sphères, l'élément d'extrémité de la voie d'écoulement des sphères définissant une entrée de sphères qui est susceptible d'être reliée à une portion en amont de la voie d'écoulement des sphères et une sortie de sphères espacée de l'entrée de sphères qui, en service, forme l'extrémité de déchargement de la voie d'écoulement des sphères ; et
- une pluralité d'entrées de contre-fluide espacées à la périphérie, positionnées à proximité de la sortie de la sphère et susceptibles d'être reliées en communication d'écoulement à une alimentation pressurisée de fluide et qui conduit dans la portion d'extrémité de la voie d'écoulement des sphères entre l'entrée des sphères et la sortie des sphères.

13. Raccord de décélération selon la revendication 12, **caractérisé en ce que** l'élément d'extrémité de la voie d'écoulement des sphères est tubulaire et cylindrique et **en ce que** les ouvertures d'entrée sont espacées sur la circonférence.

14. Raccord de décélération selon la revendication 12 ou la revendication 13, **caractérisé en ce que** les entrées de contre-fluide conduisent d'une chambre d'alimentation qui entoure l'élément d'extrémité de la voie d'écoulement des sphères, et **en ce que** la chambre d'alimentation comporte une entrée qui est susceptible d'être reliée à une alimentation pressurisée de fluide.
